# EUROPEAN PATENT APPLICATION

(11) **EP 3 789 739 A1**
(43) Date of publication of application: **10.03.2021**
(21) Application number: 19306073.8
(22) Date of filing: 06.09.2019
(51) Int. Cl.: G01D 11/30

(54) **SENSING DEVICE FOR A WINDSHIELD**

(71) Applicant: MEAS France, 31027 Toulouse Cedex 3 (FR)
(72) Inventor: PAYZAL, Sylvain, 32120 Sarrant (FR); BIGOU, Nicolas, 31200 Toulouse (FR); LEGER, Vincent, 31200 Toulouse (FR); MIRASSOU, David, 31200 Toulouse (FR); TEINTURIER, Leny, 31560 Calmont (FR)
(74) Representative: Grünecker Patent- und Rechtsanwälte PartG mbB

(57) **Abstract**

The invention relates to a sensing device for a windshield comprising a printed circuit board PCB (102, 202, 302) comprising a sensor controlling means (108), at least one sensor (104) and an interconnecting means (106, 206, 306) for connecting the at least one sensor (104) to the printed circuit board (102, 202, 302), characterised in that the interconnecting means (106, 206, 306) is directly connected to the printed circuit board (102, 202, 302) such that a flexible loop (116, 216, 316) is formed by the interconnecting means (106, 206, 306).

## Description

The present invention relates to a sensing device for a windshield, in particular for motor vehicles.

Temperature sensors, humidity sensors, optical sensors or a combination thereof are known to be used in windshield sensing devices for the purpose of automatically adapting the heating, ventilation, and air conditioning (so called HVAC) or for automatically switching on the wiper.

As an example, a windshield temperature sensing device is commonly used for preventing fogging conditions. Windshield mounted temperature and/or humidity sensors can further be combined with light sensors or solar sensors.

For allowing a precise and reliable monitoring of the temperature and/or the moisture, the sensor of the sensing device has to be kept in constant contact with the surface of the windshield surface during the whole lifetime of the vehicle, and thus withstand mechanical shock and vibration. Thus, the sensing device needs to be securely attached to the windshield.

A way to provide such a contact of the sensor with the windshield of the vehicle is disclosed in US 7,770,433 B2. It illustrates a sensing device comprising a housing adapted to hold a humidity sensor towards the windscreen of a vehicle or any other type of window. A flexible printed circuit board is arranged between the humidity sensor and the windscreen and provides a connection between the humidity sensor and further circuitry of the detector. The humidity sensor is located under a cap, which is engaged by a glider member. A spring pushes the glider member towards the windscreen.

Another approach is shown in DE 10 2006 060 548 A1, where a rain sensor for motor vehicles comprises a temperature and humidity module located on a flex circuit board, which is pressed against the vehicle window by means of a spring or by means of the elastic restoring force of the flex circuit board against the vehicle window.

In order to obtain reliable measurements for the sensing device, the temperature and humidity module need to be located at a distance of the sensor unit in order to reduce the influence of the sensor unit on the measurements of the temperature and humidity module. Such sensor device configuration results in a complex assembly of the sensor unit comprising a temperature and humidity module.

Furthermore, due to the presence of a plurality of different parts, the assembly of the sensing device is time consuming.

Hence, it is an object of the present invention to present a simple and cost-effective overall assembly process of a sensing device for a windshield.

The object of the present invention is solved with a sensing device for a windshield comprising a printed circuit board PCB comprising a sensor controlling means, at least one sensor and an interconnecting means for connecting the at least one sensor to the printed circuit board, characterised in that the interconnecting means is directly connected to the printed circuit board such that a flexible loop is formed by the interconnecting means. In the sensing device according to the invention, the direct connection between the interconnecting means and the printed circuit board makes it possible to pre-assemble the printed circuit board and the interconnecting means before mounting them into the sensor housing. Furthermore, the flexible loop can also be prefabricated with the printed circuit board out of line of the assembly process, and therefore results in a simplified overall assembly of the sensing device. This results in a simple component that can be connected in a simple manner with the housing of the sensing device to form the sensing device.

In a variant of the invention, the flexible loop can be formed by a form-fit connection. In a variant of the invention, the form-fit connection can be a hook type locking means, in particular a harpoon hook. A form-fit connection allows a reliable connection. Furthermore, a form-fit connection is easy to realize.

In a variant of the invention, the form-fit connection can be realised between end portions of the interconnecting means thereby forming a closed loop. Forming the flexible loop by attaching the end portions of the interconnecting means further simplifies the assembly process.

In a variant of the invention, the form-fit connection can be realised between the printed circuit board and at least one end portion of the interconnecting means. The connection between the interconnecting means and the printed circuit board can be a combination of soldered and mechanical connections.

In a variant of the invention, the direct connection between the printed circuit board and the interconnecting means can be a soldered connection. This ensures a reliable connection.

In a variant of the invention, the at least one sensor can be a non-optical sensor and the printed circuit board comprises at least one optical sensor. Thus, the non-optical sensor is located at a distance of the sensor unit in order to reduce the influence of the sensor unit on the measurements of the non-optical sensors. The non-optical sensor can be a temperature or humidity sensor or a combination of both. Thus, the sensing device can be a rain sensing device with additional humidity and temperature sensors. Such combination of sensors enables to measure the fogging conditions in a vehicle for example.

In a variant of the invention, the at least one sensor can be located on the flexible loop of the interconnecting means, in particular at the apex of the flexible loop of the interconnecting means. The at least one sensor is thus maintained in contact with the windshield through the interconnecting means by the elastic restoring force of the interconnecting means, ensuring a good and secure contact.

In a variant of the invention, the interconnecting means can be connected to the printed circuit board so that both end portions of the interconnecting means are soldered to the printed circuit board or glued. Forming the loop and attaching it to the printed circuit board can thus be realized at the same time.

In a variant of the invention, both end portions of the interconnecting means can be soldered to each other. By soldering the end parts to each other, a more reliable connection is achieved.

In a variant of the invention, the sensing device can comprise only one printed circuit board. Therefore, the flexible loop is fabricated directly on the only one printed circuit board of the sensing device.

In a variant of the invention, the flexible loop can be embedded into a restricted volume, such that the flexible loop touches the walls of the restricted volume on both sides. The restricted volume can represent a housing or a part of the housing of the sensing device. The elastic restoring force of the flexible loop is further enhanced due the fact that the flexible loop is blocked by the sidewalls of the restricted volume on both sides.

The invention may be understood by reference to the following description taken in conjunction with the accompanying figures, in which reference numerals identify features of the invention.
Figure 1a shows a three dimensional side view of a sensing device according to a first embodiment of the invention.
Figure 1b shows a three dimensional bottom view of the sensing device according to the first embodiment of the invention.
Figure 2a shows a three dimensional side view of a sensing device according to a second embodiment of the invention.
Figure 2b shows a three dimensional bottom view of the sensing device according to the second embodiment of the invention.
Figure 3 shows a three dimensional view of a sensing device according to a third embodiment of the invention.
Figure 4 shows a fourth embodiment of a sensing device according to the first embodiment placed on a windshield of a vehicle.

The invention will now be described in more detail using advantageous embodiments in an exemplary manner and with reference to the drawings. The described embodiments are merely possible configurations and it should be kept in mind that the individual characteristics as described above can be provided independently of one another or can be omitted altogether during the implementation of the present invention.

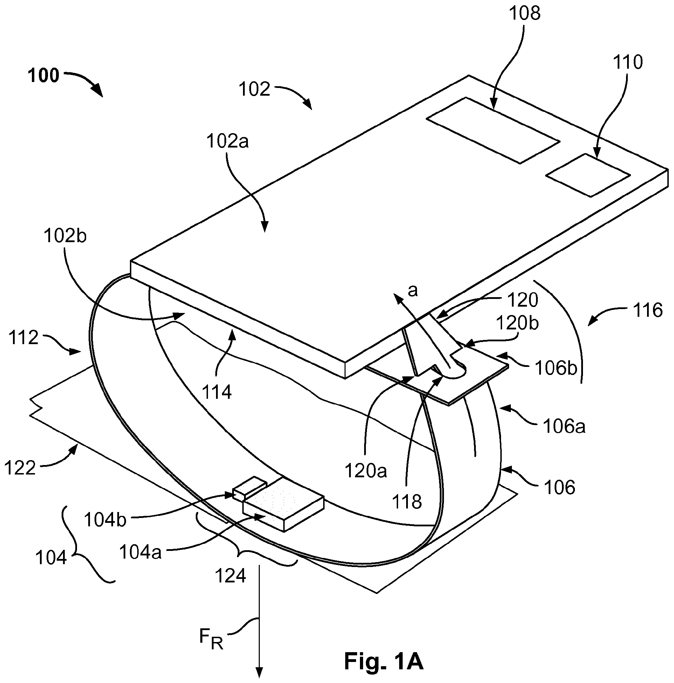

Figure 1a shows a three dimensional side view of a sensing device according to a first embodiment of the invention.

The sensing device 100 comprises a printed circuit board 102, at least one sensor 104 and an interconnecting means 106.

The printed circuit board 102 can be located within a housing (not shown) of a sensing device.

The printed circuit board 102 comprises sensor controlling means 108 and comprises at least one optical sensor 110. The at least one optical sensor 110 is mounted on the printed circuit board 102. The optical sensor 110 can be a rain sensor or a light sensor.

The interconnecting means 106 can be a foil conductor or a flexible printed circuit board. It comprises a flexible carrier and one or more conductor lines. Typically, the carrier is made of a flexible plastic material.

The interconnecting means 106 is directly connected to the printed circuit board 102. The direct connection between the interconnecting means 106 and the printed circuit board 102 is realized via a soldered connection 114. This connection enables the printed circuit board 102 and the interconnecting means 106 to be pre-mounted with one another before assembly into the housing of the sensing device 100. Using soldering, a mechanical but also the electrical connection between the conductor lines of the interconnecting means 106 and the conductor lines of the PCB board 102 can be realized in one step. The interconnecting means 106 and the printed circuit board 102 can be mounted as only one single component into the sensor housing in a simplified manner compared to the state of the art sensing devices, for which a plurality of parts have to be assembled in the assembly line. Instead of soldering or in addition, the interconnecting means 106 could also be glued to the printed circuit board 102.

The at least one sensor 104 is a non-optical sensor. The non-optical sensor 104 can be a temperature sensor or a humidity sensor. In this embodiment, the sensing device 100 comprises a combination of two non-optical sensors, a humidity sensor 104a and a temperature sensor 104b.

The at least one sensor 104 is located on the interconnecting means 106 so that the interconnecting means 106 electrically connects the at least one sensor 104 to sensor controlling means 108 on the printed circuit board 102.

The interconnecting means 106 is directly connected to the printed circuit board PCB 102 such that a flexible loop 112 is formed by the interconnecting means 106. The flexible loop 112 is located on the printed circuit board 102.

A loop is defined as a shape produced by a curve that bends round Thus, the loop 112 of the interconnecting means 106 is obtained by bending the interconnecting means 106 to obtain a curved form of the interconnecting means 106.

In the embodiment shown in Fig. 1a, the loop 112 of the interconnecting means 106 is realized so that both end portions 106a and 106b of the interconnecting means 106 are in contact to each other.

In this embodiment, the soldered part 114 of the interconnecting means 106 is provided on the bottom surface 102b of the printed circuit board 102 opposite the top surface 102a on which the sensor control means 108 and the optical sensor 110 are provided. The bottom surface 102b of the printed board 102 is the surface facing the window 122 of the vehicle when the sensing device 100 is placed on a window 122. In a variant, the soldered part 114 can also be provided on the top surface 102a of the printed circuit board 102.

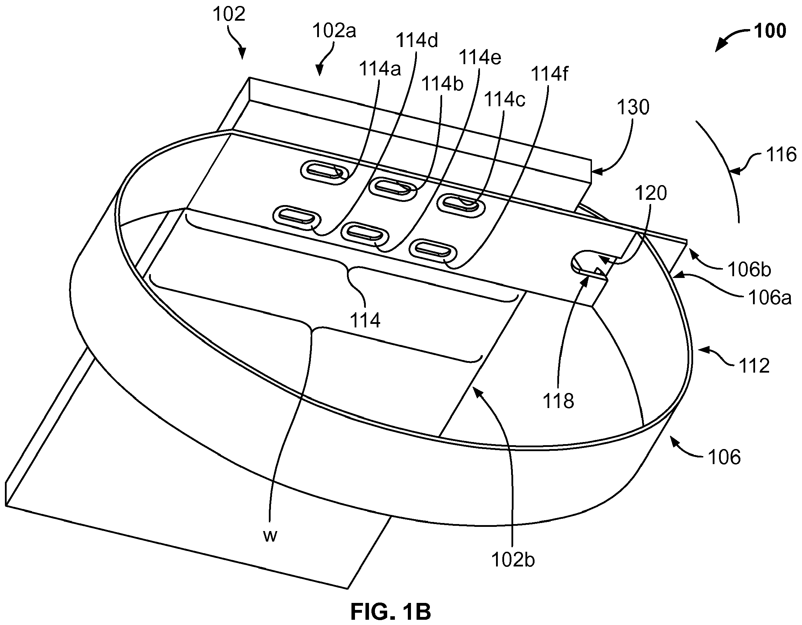

The soldered part 114 of the interconnecting means 106 on the surface 102b of the printed circuit board 102 comprises a plurality of soldering pads 114a-114f as shown in fig. 1b.

As shown in Fig. 1a, the interconnecting means 106 forms a closed loop 112. The closed loop 112 is achieved by a form-fit connection 116 realized between the first and second end portions 106a and 106b of the interconnecting means 106 after having bent around the first end portion 106a. The form-fit connection can also be a plug-in connection.

The form-fit connection 116 is realized by a hook type locking means 120, in particular a harpoon or arrow shape 120 on the first end portion 106a and an elongated slit 118 on the second end portion 106b of the interconnecting means 106. To realize the form-fit connection 116, the first end portion 106a is twisted by about 90° around its longitudinal axis a and then introduced into the slit 118 of the second end portion 106b. When releasing the first end portion 106a, the harpoon or arrow shape 118 rotates back due to the resilience of the interconnecting means 106 and thereby locks the loop 112. The protrusions 120a and 120b of the harpoon or arrow shape 120 are then blocked by the second end portion 106b. The two locking elements arrow 120 and slit 118 have a complementarity of form so that when put together, a secure and locked connection is realized.

In a variant, the locking element 120 and the locking region 118 can have another shape as the one of the arrow shape or harpoon shape and the stadium-shape respectively.

The interconnecting means 106 comprises at least one non-optical sensor 104. The at least one non-optical sensor 104 is located on the inside side of the loop 112 of the interconnecting means 106, being the side facing the bottom surface 102b of the printed circuit board 102. When the sensing device 100 is applied on a windshield 122 of a vehicle, the interconnecting means 106 is sandwiched between the at least one non-optical sensor 104 and the window 122.

The at least non-optical sensor 104 is located at the apex 124 of the loop 112 of the interconnecting means 106 corresponding to the region that will be pressed against the window 122 of a vehicle when assembled to the vehicle.

When the sensing device 100 is applied on the windshield 122 of a vehicle, the at least non-optical sensor 104 is pressed against the vehicle window 122 by means of the elastic restoring force F_{R} of the interconnecting means 106. Thus, the sensing device 100 is maintained in position on the vehicle window 122 in a secure and durable fixation.

Figure 1b shows a bottom view of the sensing device 100 according to the first embodiment of the invention.

The soldered part 114 of the interconnecting means 106 is provided on the bottom surface 102b of the printed circuit board 102 opposite the top surface 102a on which the sensor control means 108 and the optical sensor 110 are provided.

In Figure 1b, the soldered part 114 of the interconnecting means 106 is connected to the printed circuit board 102 via a plurality of soldering pads 114a-114f. The soldered part 114 of the interconnecting means 106 can extend over the entire width w of the printed circuit board 102 or only a part thereof.

To get access to the slit 118, the second end portion 106b extends beyond the border 130 of the printed circuit board 102. Thus, the arrow or harpoon shape 120 of the first end portion 106a can easily be introduced in the slit 118 during formation of the loop 112.

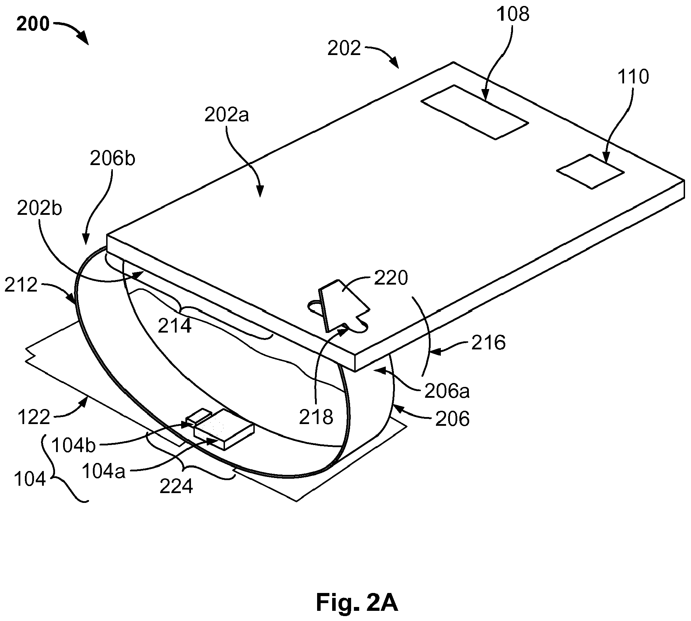

Figure 2a shows a three dimensional view of a sensing device according to a second embodiment of the invention.

All the features of the sensing device 200 of the second embodiment which are in common with the sensing device 100 of the first embodiment illustrated in Figure 1a will not be described in detail again but reference is made to their description above with the same reference numbers being used as in fig. 1a. Furthermore, the variants based on the structure of the first embodiment can also be applied to the sensing device of the second embodiment.

In the second embodiment, the form-fit connection 216 of the sensing device 200 is realized between the interconnecting means 206 and the printed circuit board 202, instead of forming it between the two end portions 106a and 106b of the interconnecting means 106.

The locking elements of the form-fit connection 216 have the same shape as the one described in the first embodiment. The elongated slit 218 is formed in the printed circuit board 202 while the arrow or harpoon shaped part 220 is part of the first end portion 206a of the interconnecting means 206. Thus, the locking mechanism of the form-fit connection 216 is the same as in the first embodiment.

The slit 218 can be directly machined into the printed circuit board 202. In a variant, it can be a part of a separate element attached to the printed circuit board 202.

In the second embodiment, the flexible loop 212 of the interconnecting means 206 is not a closed loop, as here the two end portions 206a and 206b of the interconnecting means 206 do not connect or overlap each other. Still a loop with flexibility is achieved.

On the first end portion 206b side of the interconnecting means 206, the direct connection with the printed circuit board 202 in area 214 is achieved via soldering. In a variant, the direct connection can also be realized using a glue.

In this embodiment, the soldered part 214 of the interconnecting means 206 is provided on the bottom surface 202b of the printed circuit board 202 opposite the top surface 202a on which the sensor control means 108 and the optical sensor 110 are provided. The bottom surface 202b of the printed board 202 is the surface facing the window 122 of the vehicle when the sensing device is mounted on the window 122.

In a variant, the soldered part 214 can also be provided on the top surface 202a of the printed circuit board 202.

In this embodiment, the connection between the interconnecting means 206 and the PCB 202 is a combination of soldered and/or glued connection and a form-fit connection.

In a variant of the embodiment, a second form-fit connection can also be applied to the other second end portion 206b of the interconnecting means 206 so that the interconnecting means 206 and the PCB 202 are directly connected to each other by two form-fit connections.

Again, with the sensing device 200 according to the second embodiment of the invention, the flex loop 212 of the interconnecting means 206 can be fabricated directly on the printed circuit board 202 and thus pre-assembled. Then, the flex loop 212 and the printed circuit board 202 can be added as a component to the sensor housing 200 in a simple manner. Therefore, the fabrication process of the sensing device according to the invention is a simpler process than the one for the state of the art sensing device.

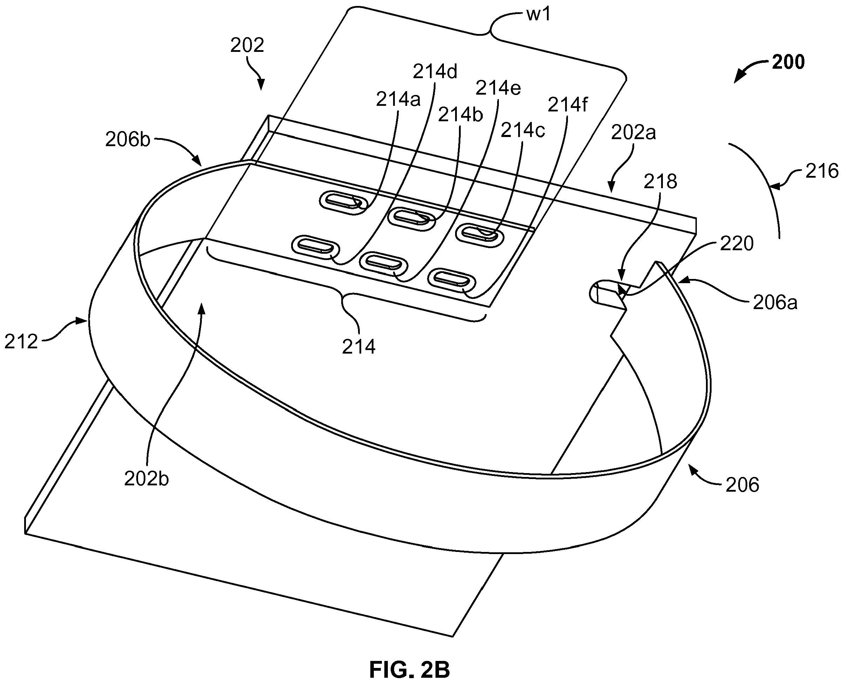

Figure 2b shows a bottom view of the sensing device 200 according to the second embodiment of the invention.

As shown in fig. 2b, the soldered part 214 of the interconnecting means 206 being connected to the printed circuit board 202 is soldered along a portion w1 of the entire width w of the printed circuit board 202.

The soldered area 214 of interconnecting means 206 comprises a plurality of soldering pads 214a to 214f like in the first embodiment.

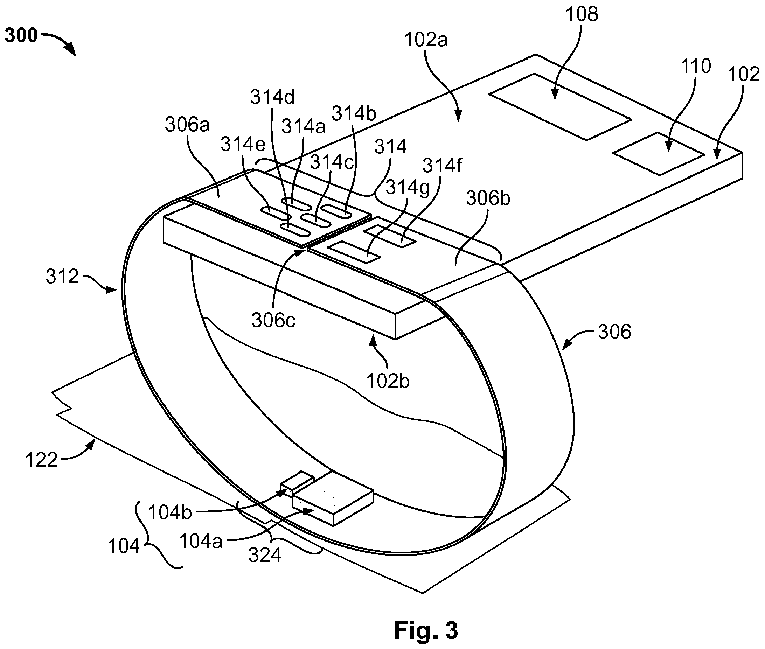

Figure 3 shows a three dimensional view of a sensing device according to a third embodiment of the invention.

All the features of the sensing device of the first embodiment of fig. 1a and second embodiment of fig. 2a which are in common with the sensing device of the third embodiment will not be described in detail again but reference is made to their description above, with the same reference numbers being used as in fig. 1a or fig. 2a.

In the third embodiment as shown in fig. 3, both end portions 306a and 306b of the interconnecting means 306 are connected to the printed circuit board 102.

The connection 320 of the two end portions 306a and 306b of the interconnecting means 306 with the printed circuit board 102 is a direct connection and is realized by soldering and/or gluing. The printed circuit board 102 and the interconnecting means 306 can then be pre-mounted with one another before assembly into the housing of the sensing device. The interconnecting means 306 and the printed circuit board 102 can be connected to one another electrically and mechanically in one process step and added as a single component to the sensor housing a simple manner. Thus, the fabrication process is simpler than for the state of the art sensing devices.

In this embodiment, the two end portions 306a and 306b of the interconnecting means 306 are also connected to each other to form a closed loop of the interconnecting means 306. The two end portions 306a and 306b are connected to each other by soldering the contact area 306c.

In fig. 3, the soldering of the two end portions 306a and 306b of the interconnecting means 306 is realized on the top surface 102a of the printed circuit board 102, thus on the same side as the sensor control means 108 and the optical sensor 110. In a variant, it can also be realized on the other surface of the printed circuit board 102, the bottom surface 102b being the surface facing the windshield 122 when the sensing device 300 is applied to the windshield 122.

The soldered area 314 of the end portions 306a, 306b of the interconnecting means 306 with the PCB 102 comprises a plurality of soldering pads 314a to 314g like in the first embodiment and second embodiment. The plurality of soldering pads 314a - 314g are located on the two end portions 306a, 306b. As shown in fig. 3, the soldering pads 314a - 314e are located on the end portions 306a while the soldering pads 314f and 314g are located on the end portion 306b.

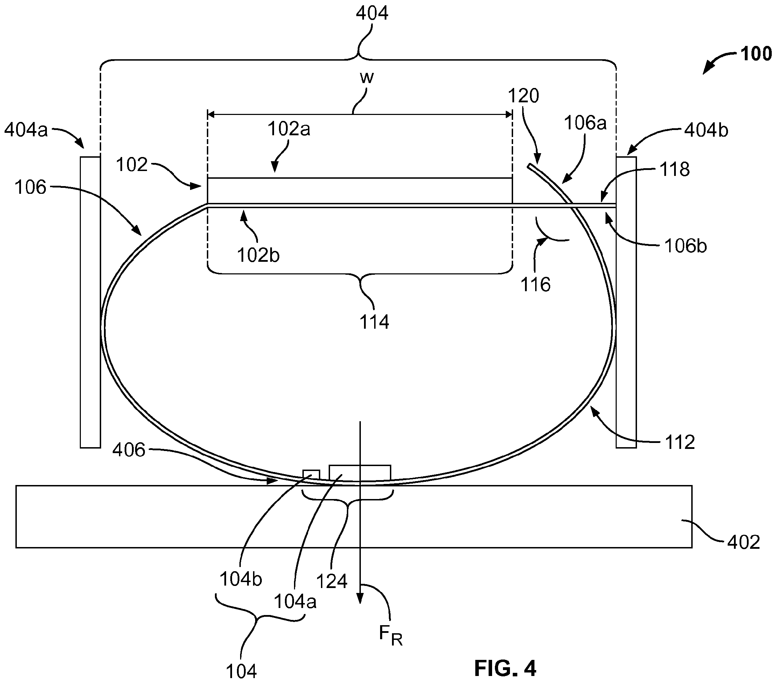

Figure 4 shows a fourth embodiment of a sensing device according to the first embodiment placed on a windshield.

Figure 4 shows the sensing device 100 according to the first embodiment placed on a window 402 of a vehicle (not shown), in particular a windshield. According to variants, the sensing device 200 and 300 according to the second or third embodiment can be used instead.

In an unmounted state of the sensing device, the flexible loop 112 of the sensing device 100 is embedded into a restricted volume 404, such that the flexible loop 112 touches the walls 404a, 404b of the restricted volume 404 on both sides. The restricted volume 404 can represent a housing or a part of the housing of the sensing device 100.

In a mounted state of the sensing device 100, the flexible loop 112 is pressed onto the window 402 of the vehicle by the housing. Due to the elastic restoring force F_{R} created by the loop shape 112 of the interconnecting means 106, the at least one non-optical sensor 104, located at the apex 124 of the flexible loop 112, is thus touching the window 402 at the section 406. Thus, the sensing device 100 is maintained in position on the vehicle window 402 in a secure and reliable way.

The restoring force F_{R} in this embodiment is furthermore enhanced due the fact that the flexible loop 112 is blocked by the sidewalls 404a, 404b of the restricted volume 404 on both sides.

A number of embodiments of the invention have been described. Nevertheless, it is understood that various modifications and enhancements may be made without departing the following claims.

### Reference numbers

- 100: sensing device according to the first embodiment
- 102: printed circuit board
- 102a: top surface of the printed circuit board
- 102b: bottom surface of the printed circuit board
- 104: non-optical sensor
- 104a: humidity sensor
- 104b: temperature sensor
- 106: interconnecting means
- 106a: first end portion of the interconnecting means
- 106b: second end portion of the interconnecting means
- 108: sensor controlling means
- 110: optical sensor
- 112: flexible loop
- 114: soldered section of the interconnecting means with the printed circuit board
- 114a: soldered pad
- 114b: soldered pad
- 114c: soldered pad
- 114d: soldered pad
- 114e: soldered pad
- 114f: soldered pad
- 116: form-fit connection
- 118: elongated slit
- 120: a harpoon or arrow shape
- 120a: protrusions of the harpoon or arrow shape
- 120b: protrusions of the harpoon or arrow shape
- 122: windshield
- 124: apex region of the flexible loop
- F_{R}: elastic restoring force

- 200: sensing device according to the second embodiment
- 202: printed circuit board
- 202a: top surface of the printed circuit board
- 202b: bottom surface of the printed circuit board
- 206: interconnecting means
- 206a: first end portion of the interconnecting means
- 206b: second end portion of the interconnecting means
- 212: flexible loop
- 214: soldered section of the interconnecting means with the printed circuit board
- 214a: soldered pad
- 214b: soldered pad
- 214c: soldered pad
- 214d: soldered pad
- 214e: soldered pad
- 214f: soldered pad
- 216: form-fit connection
- 218: elongated slit
- 220: a harpoon or arrow shape
- 224: apex region of the flexible loop

- 300: sensing device according to the third embodiment
- 306: interconnecting means
- 306a: first end portion of the interconnecting means
- 306b: second end portion of the interconnecting means
- 306c: contact between the two end portions of the interconnecting means
- 312: flexible loop
- 314: soldered section of the interconnecting means
- 314a: soldered pad
- 314b: soldered pad
- 314c: soldered pad
- 314d: soldered pad
- 314e: soldered pad
- 314f: soldered pad
- 314g: soldered pad
- 324: apex of the flexible loop

- 402: window of a vehicle
- 404: restricted volume
- 404a: sidewall of the restricted volume
- 404b: sidewall of the restricted volume
- 406: contact portion between the window and the flexible loop

## Claims

1. A sensing device for a windshield comprising:
a printed circuit board PCB (102, 202, 302) comprising a sensor controlling means (108);
at least one sensor (104); and
an interconnecting means (106, 206, 306) for connecting the at least one sensor (104) to the printed circuit board (102, 202, 302),
**characterised in that**
the interconnecting means (106, 206, 306) is directly connected to the printed circuit board (102, 202, 302) such that a flexible loop (112, 212, 312) is formed by the interconnecting means (106, 206, 306).

2. Sensing device according to claim 1, wherein the flexible loop (112, 212) is formed by a form-fit connection (116, 216).

3. Sensing device according to claim 2, wherein the form-fit connection (116, 216) is a hook type locking means (120, 220), in particular a harpoon hook.

4. Sensing device according to any one of the previous claims 1 to 3, wherein the form-fit connection (116, 216) is realized between end portions (106a, 106b, 206a, 206b) of the interconnecting means (106, 206) thereby forming a closed loop (112, 212).

5. Sensing device according to any one of the previous claims 1 to 3, wherein the form-fit connection (116, 216) is realized between the printed circuit board (102, 202) and at least one end portion (106a, 106b, 206a, 206b) of the interconnecting means (106, 206).

6. Sensing device according to any one of the previous claims 1 to 5, wherein the direct connection between the printed circuit board (102, 202, 302) and the interconnecting means (106, 206, 306) is a soldered connection.

7. Sensing device according to any one of the previous claims 1 to 6, wherein the at least one sensor (104) is a non-optical sensor and the printed circuit board (102, 202, 302) comprises at least one optical sensor (110).

8. Sensing device according to any one of the previous claims 1 to 7, wherein the at least one sensor (104) is located on the flexible loop (112, 212, 312) of the interconnecting means (106, 206, 306), in particular at the apex (124, 224, 324) of the flexible loop (112, 212, 312) of the interconnecting means (106, 206, 306).

9. Sensing device according to any one of the previous claims 1 or 2, wherein the interconnecting means (306) is connected to the printed circuit board (302) so that both end portions (306a, 306b) of the interconnecting means (306) are soldered to the printed circuit board (302) or glued.

10. Sensing device according to the previous claim 9, wherein both end portions (306a, 306b) of the interconnecting means (306) are soldered to each other.

11. Sensing device according to any one of the previous claims 1 to 10 comprising only one printed circuit board (102, 202, 302).

12. Sensing device according to any one of the previous claims 1 to 11, wherein the flexible loop (112, 212, 312) is embedded into a restricted volume (404), such that the flexible loop (112, 212, 312) touches the walls (404a, 404b) of the restricted volume (404) on both sides.
